# EUROPÄISCHE PATENTSCHRIFT

(11) **EP 0 649 436 B1**
(45) Veröffentlichungstag und Bekanntmachung des Hinweises auf die Patenterteilung: **24.01.1996**
(21) Anmeldenummer: 94913441.5
(22) Anmeldetag: 29.04.1994
(51) Int. Cl.: C08B 1/00, D01F 2/00, C08J 5/18

(54) **STABILE FORM- BZW. SPINNMASSE ENTHALTEND CELLULOSE**
STABLE MOULDING OR SPINNING COMPOUND CONTAINING CELLULOSE
MATIERE MOULABLE OU FILABLE, STABLE, CONTENANT DE LA CELLULOSE

(30) Priorität: 05.05.1993 AT 886/93
(43) Veröffentlichungstag der Anmeldung: 26.04.1995
(73) Patentinhaber: LENZING AKTIENGESELLSCHAFT, A-4860 Lenzing (AT)
(72) Erfinder: KALT, Wolfgang, A-4860 Lenzing (AT); MÄNNER, Johann, A-4852 Weyregg 125 (AT); EICHINGER, Dieter, A-4840 Vöcklabruck (AT); SCHREMPF, Christoph, A-4701 Bad Schallerbach (AT)
(74) Vertreter: Schwarz, Albin, Dr.
(86) Internationale Anmeldenummer: AT9400055
(87) Internationale Veröffentlichungsnummer: WO9425492

(56) Entgegenhaltungen:
- EP-A- 0 047 929
- EP-A- 0 452 610
- DD-A- 158 656

## Beschreibung

Die vorliegende Erfindung betrifft eine stabile Form- und Spinnmasse enthaltend Cellulose und ein wässeriges tertiäres Aminoxid. Die vorliegende Erfindung betrifft weiters die Verwendung spezieller Stabilisatoren zur Stabilisierung der in einem tertiären Aminoxid gelösten Cellulose.

Aus der US-PS 2,179,181 ist bekannt, daß tertiäre Aminoxide Cellulose zu lösen vermögen und daß aus diesen Lösungen durch Fällung cellulosische Fasern gewonnen werden können. Ein Verfahren zur Herstellung derartiger Lösungen ist beispielsweise aus der EP-A - 0 356 419 bekannt. Gemäß dieser Veröffentlichung wird zunächst eine Suspension von Cellulose in einem wässerigen tertiären Aminoxid bereitet. Das Aminoxid enthält bis zu 40 Masse-% Wasser. Die wässerige Cellulose-Suspension wird erhitzt und unter Druckverminderung wird so lange Wasser abgezogen, bis die Cellulose in Lösung geht.

Während des Lösens und auch während des Lagerns der Lösung bei erhöhter Temperatur tritt ein Abbau der Cellulose und des Lösungsmittels ein. Die Abbauprodukte können die nach Fällung erhaltenen Formkörper, z.B. Fasern und Folien, in erheblichem Maße verfärben und bei der Chemikalienrückgewinnung nur mit erheblichem Aufwand rückgewonnen werden. Letzteres ist aber notwendig, um eine Belastung der Umwelt zu vermeiden.

Die EP-A - 0 047 929 empfiehlt die Verwendung von Gallussäurepropylester (GPE) als Stabilisator. Es hat sich allerdings gezeigt, daß die stabilisierende Wirkung dieser Verbindung nur eine relativ kurze Zeit anhält, sodaß eine erhitzte Celluloselösung rasch verarbeitet werden muß. Außerdem ist GPE teuer und auch seine Löslichkeit läßt in polaren Lösungsmedien, wie Wasser, zu wünschen übrig.

Die Erfindung stellt sich die Aufgabe, einen Stabilisator zur Verfügung zu stellen, der die obigen Nachteile nicht aufweist und die gelöste Cellulose einen längeren Zeitraum gegen Abbau stabilisieren kann als GPE.

Die genannte Aufgabe wird erfindungsgemäß gelöst, indem ein Gemisch von Glucosiden der Gallussäure und der m-Digallussäure zur Stabilisierung der Cellulose gegen Abbau verwendet wird.

Die Erfindung betrifft weiters eine stabile Form- bzw. Spinnmasse enthaltend Cellulose, ein tertiäres Aminoxid, insbesondere N-Methylmorpholin-N-Oxid, und gegebenenfalls Wasser, sowie einen Stabilisator, wobei als Stabilisator ein Gemisch von Glucosiden der Gallussäure und der m-Digallussäure vorgesehen ist.

Eine bevorzugte Ausführungsform der erfindungsgemäßen stabilen Form- bzw. Spinnmasse enthält als Stabilisator Gerbsäure.

Als Gerbsäure [CAS 1401-55-4] wird gemäß Arzneibüchern ein Gemisch von Estern der D(+)-Glucose mit Gallussäure und m-Digallussäure bezeichnet. Bevorzugt sind Stoffe, in denen alle alkoholischen OH-Gruppen der Glucose mit Gallussäure und m-Digallussäure verestert sind, wobei die m-Digallussäure am besten einen Anteil von 40% bis 90% der Summe von Gallussäure und m-Digallussäure ausmacht.

Gerbsäure ist auch in den sogenannten Tanninen enthalten, die erfindungsgemäß ebenfalls als Stabilisatoren eingesetzt werden können. Eine weitere bevorzugte Ausführungsform der erfindungsgemäßen stabilen Form- bzw. Spinnmasse enthält somit als Stabilisator Tannin.

Tannine sind Produkte, die in industriellem Maßstab zum Gerben eingesetzt werden. Man unterscheidet zwischen vegetabilen und synthetischen Stoffen, wobei die vegetabilen Produkte extraktiv aus Naturstoffen wie Hölzern und Pflanzen gewonnen werden.

Es hat sich erfindungsgemäß gezeigt, daß sowohl vegetabile Tannine als auch die Gerbsäure selbst gute Stabilisierungseigenschaften für Cellulose in tertiären Aminoxiden aufweisen. Es konnte festgestellt werden, daß unter den üblichen Bedingungen der Lösungsherstellung der Abbau der Cellulose hintangehalten sowie eine verringerte Zersetzung des tertiären Aminoxids beobachtet werden.

Es hat sich gezeigt, daß die erfindungsgemäß verwendeten Stabilisatoren bereits in einer Konzentration von maximal 0,05 Masse% (bezogen auf die Cellulose) sehr gute Ergebnisse erzielt werden können. Diese Konzentration liegt unter jener, die im Stand der Technik für Gallussäurepropylester empfohlen wird. Eine besonders bevorzugte Ausführungsform der erfindungsgemäßen Form- bzw. Spinnmasse enthält somit den Stabilisator in einer Konzentration von maximal 0,05 Masse%, bezogen auf die Masse an Cellulose.

Mit dem nachfolgenden Beispiel wird die Erfindung noch näher erläutert.

### Beispiel

Zur Lösungsherstellung wurde eine wässerige Lösung mit 70 Masse% NMMO verwendet. Diese NMMO-Lösung wurde mit Cellulose versetzt, und in einem Laborkneter wurde bei einem Druck von 250 mbar und einer Temperatur von ca. 95°C Wasser abgedampft und die Cellullose aufgelöst. Die Mengen wurden so gewählt, daß die erhaltene Lösung 10 Masse% Cellulose, 15% Wasser und 75% NMMO enthielt.

30 Minuten und 750 Minuten nach der Auflösung der Cellulose wurde die Viskosität der Lösung mittels eines Bohlin-Rheometers gemessen (Meßtemperatur: 120°C). Die erhaltenen Ergebnisse sind in der nachfolgenden Tabelle als "Vergleich" angegeben.

Anschließend wurde die obige Arbeitsweise zwei Mal wiederholt, wobei jedoch GPE (Konzentration: 0,05%, bezogen auf Cellulose) bzw. Gerbsäure (Konzentration: 0,05%, bezogen auf Cellulose; Tannic Acid von Aldrich Chemicals) als Stabilisator zugegeben wurden. Die erhaltenen Ergebnisse sind ebenfalls in der nachfolgenden Tabelle angegeben.

**Tabelle**

| | | |
|---|---|---|
| Stabilisator | Viskosität (Pa.s) | |
| | nach 30 min | nach 750 min |
| | | |
| Vergleich (ohne Stabilisator) | 753 | 18 |
| | | |
| GPE | 985 | 383 |
| Gerbsäure | 985 | 755 |

Der Tabelle ist zu entnehmen, daß die Viskosität der Lösung bei Verwendung von GPE als Stabilisator auf einen beträchtlich tieferen Wert abgenommen hat als bei Verwendung von Gerbsäure. Dies bedeutet, daß Gerbsäure die Cellulose während einer Zeit von 750 min (= 12 Stunden 30 Minuten) besser gegen Abbau stabilisieren kann als GPE.

Ähnlich gute Ergebnisse wurden auch mit anderen Gemischen von Glucosiden der Gallussäure und der m-Digallussäure erhalten.

## Patentansprüche

1. Stabile Form- bzw. Spinnmasse enthaltend Cellulose, ein tertiäres Aminoxid, insbesondere N-Methylmorpholin-N-Oxid, und einen Stabilisator sowie gegebenenfalls Wasser, dadurch gekennzeichnet, daß als Stabilisator ein Gemisch von Glucosiden der Gallussäure und der m-Digallussäure vorgesehen ist.

2. Stabile Form- bzw. Spinnmasse nach Anspruch 1, dadurch gekennzeichnet, daß als Stabilisator Gerbsäure vorgesehen ist.

3. Stabile Form- bzw. Spinnmasse nach Anspruch 1, dadurch gekennzeichnet, daß als Stabilisator Tannin vorgesehen ist.

4. Stabile Form- bzw. Spinnmasse nach einem der Ansprüche 1 bis 3, dadurch gekennzeichnet, daß der Stabilisator in einer Konzentration von maximal 0,05 Masse%, bezogen auf die Masse an Cellulose, enthalten ist.

5. Verwendung eines Gemisches von Glucosiden der Gallussäure und der m-Digallussäure zur Stabilisierung von Form- bzw. Spinnmassen enthaltend Cellulose und ein tertiäres Aminoxid.

## Claims

1. Stable moulding material or spinning material containing cellulose, a tertiary amine oxide, especially N-methylmorpholine-N-oxide, a stabiliser and optionally water, characterised in that a mixture of the glucosides of gallic acid and m-digallic acid is provided as the stabiliser.

2. Stable moulding material or spinning material in accordance with Claim 1, characterised in that tannic acid is provided as the stabiliser.

3. Stable moulding material or spinning material in accordance with Claim 1, characterised in that tannin is provided as the stabiliser.

4. Stable moulding material or spinning material in accordance with one of the Claims 1 to 3, characterised in that the stabiliser is present in a concentration of a maximum of 0.05% by weight, based on the weight of the cellulose.

5. Use of a mixture of glucosides of gallic acid and m-digallic acid for the stabilisation of a moulding material or spinning material containing cellulose and a tertiary amine oxide.

## Revendications

1. Masse à mouler ou à filer, stable, contenant de la cellulose, un oxyde d'amine tertiaire, plus particulièrement le N-méthylmorpholine-N-oxyde, et un stabilisateur, ainsi qu'éventuellement de l'eau, caractérisée en ce que, à titre de stabilisateur, on a prévu un mélange de glucosides de l'acide gallique et de l'acide m-digallique.

2. Masse à mouler ou à filer, stable, suivant la revendication 1, caractérisée en ce que, à titre de stabilisateur, on a prévu l'acide tannique.

3. Masse à mouler ou à filer, stable, suivant la revendication 1, caractérisée en ce que, à titre de stabilisateur, on a prévu du tanin.

4. Masse à mouler ou à filer, stable, suivant l'une quelconque des revendications 1 à 3, caractérisée en ce que le stabilisateur y est contenu en une concentration d'au maximum 0,05% massique, par rapport à la masse de cellulose.

5. Utilisation d'un mélange de glucosides de l'acide gallique et de l'acide m-digallique en vue de la stabilisation de masses à mouler ou à filer, qui contiennent de la cellulose et un oxyde d'amine tertiaire.
